# EUROPÄISCHE PATENTSCHRIFT

(11) **EP 1 748 131 B1**
(45) Veröffentlichungstag und Bekanntmachung des Hinweises auf die Patenterteilung: **18.11.2009**
(21) Anmeldenummer: 06013956.5
(22) Anmeldetag: 05.07.2006
(51) Int. Cl.: E05B 67/00

(54) **Sicherungssystem, vorzugsweise ein Fahrradschloss**
Locking device, preferably a bicycle lock
Système de verrouillage, de préférence un cadenas pour bicyclette

(30) Priorität: 25.07.2005 DE 102005034656
(43) Veröffentlichungstag der Anmeldung: 31.01.2007
(73) Patentinhaber: ABUS August Bremicker Söhne KG, 58300 Wetter (DE)
(72) Erfinder: Heinemann, Stefan, 58300 Wetter (DE)
(74) Vertreter: Manitz, Finsterwald & Partner GbR

(56) Entgegenhaltungen:
- EP-A- 0 934 869
- DE-U1- 29 808 775
- US-A1- 2003 151 492

## Beschreibung

Die vorliegende Erfindung betrifft ein Sicherungssystem, vorzugsweise ein Fahrradschloss.

Sicherungssysteme für Fortbewegungsmittel mit zwei oder mehr Rädern, insbesondere Fahrräder, sind allgemein bekannt und weit verbreitet. Sie dienen dazu, eine unbefugte Benutzung oder einen Diebstahl des Fortbewegungsmittels zu verhindern oder wesentlich zu erschweren. Üblicherweise wird dies mittels des Sicherungssystems durch ein Hemmen der Drehbewegung eines Rades relativ zum Rahmen des Fortbewegungsmittels und/oder durch ein Festlegen des Fortbewegungsmittels an einen unbeweglichen Gegenstand erreicht.

Es sind Sicherungssysteme bekannt, die ein lang gestrecktes Schlosselement aufweisen, an dessen einem Ende sich ein Verriegelungselement mit einem Schließmechanismus befindet, in welchem ein zweites, sich am anderen Ende des Schlosselements befindendes Verriegelungselement aufgenommen und in dieser Position verriegelt werden kann. Eine Entriegelung wird durch eine öffnende Betätigung des Schließmechanismus, beispielsweise über einen Schlüssel, eine Codeeinstellung oder über ein elektronisches Element, erreicht.

Ein Sicherungssystem ist aus dem Dokument EP-A-0934869 bekannt.

Sicherungssysteme nach dem Stand der Technik sind überwiegend für die Benutzung durch erwachsene Personen konzipiert. Es ist jedoch wünschenswert, dass auch Kinder eigenständig ohne die Mitwirkung oder Unterstützung von erwachsenen Personen Fahrräder oder Spielgeräte für die Zeit einer Nichtbenutzung gegen unbefugte Benutzung oder gegen Diebstahl sichern können. Nachteilig an Sicherungssystemen nach dem Stand der Technik ist häufig eine Art und Weise der Betätigung, die nicht auf die motorischen und kognitiven Fähigkeiten von Personen im Kindesalter abgestimmt ist, und damit zu einer Fehlbedienung oder gar einer Nichtbenutzung des Sicherungssystems führen kann. Ferner ist Kindern die Notwendigkeit des Sicherns ihrer Fahrräder oder Spielgeräte häufig nicht bewusst oder einsichtig, so dass ein Anreiz zum Sichern ihres Fahrrades oder Spielgerätes nicht gegeben ist.

Eine Aufgabe der Erfindung besteht darin, die herkömmliche Konstruktion eines Sicherungssystems dahingehend zu verbessern, dass die Bedienungsführung für Kinder erleichtert wird. Ferner soll ein erfindungsgemäßes Sicherungssystem so ausgebildet sein, dass es bei Kindern alleine durch seine technische Gestaltung einen zusätzlichen Anreiz zum Anwenden des Sicherungssystems erzeugt.

Diese Aufgabe wird durch ein Sicherungssystem gemäß Anspruch 1 gelöst. Demgemäß umfasst ein Sicherungssystem eine zweiteilig ausgebildete Spielzeugeinheit mit zwei formschlüssig ineinander passenden Spielzeugelementen. Dabei ist jedes der beiden unterschiedlich großen Spielzeugelemente unlösbar mit jeweils einem der beiden Enden eines lang gestreckten Schlosselements verbunden. Das größere Spielzeugelement weist genau eine Aufnahme für den dem lang gestreckten Schlosselement abgewandten Bereich des kleineren Spielzeugelements auf, welches in einer solchen Position im größeren Spielzeugelement verriegelbar ist, in der es nur bereichsweise in die Aufnahme des größeren Spielzeugelements eingeführt ist. In der verriegelten Position bildet ein aus dem größeren Spielzeugelement hervorstehender Bereich des kleineren Spielzeugelements eine Handhabe für ein Ergreifen desselben.

Diese Eigenschaften bewirken eine kindgerechte Bedienungsführung, welche Fehlbedienungen praktisch ausschließen. Allein durch die zueinander passenden Formen der Spielzeugelemente wird sichergestellt, dass ein Kind diese nur in der korrekten Art und Weise zusammen führen wird.

Ferner wird durch das Vorhandensein der erfindungsgemäßen Spielzeugkomponenten eine höhere Bereitschaft erreicht, das Sicherungssystem regelmäßig anzuwenden, da das verriegelnde Zusammenführen der beiden zueinander passenden Spielzeugelemente für ein Kind einen reizvollen spielerischen Aspekt umfasst, der die Motivation zur Benutzung des Sicherungssystems eindeutig erhöht.

Vorzugsweise weist bei einem erfindungsgemäßen Sicherungssystem das größere der beiden Spielzeugelemente die Form eines Land-, Luft- oder Wasserfahrzeugs und das kleinere der beiden Spielzeugelemente die Form eines Fahrzeugführers auf. Dadurch werden Kinder angeleitet, entsprechend einer ihnen von anderen Spielzeugen bekannten Funktionalität, nämlich des Einsetzens eines Fahrzeugführers in ein Fahrzeug, das Sicherungssystem sachgerecht zu bedienen.

Zumindest der den Kopf des Fahrzeugführers bildende Bereich des kleineren Spielzeugelements kann in der verriegelten Position aus dem größeren Spielzeugelement herausragen und somit die Handhabe für das Ergreifen des kleineren Spielzeugelements zum Zweck des Lösens der beiden Spielzeugelemente voneinander bilden. Dieser hervorstehende Bereich kann einem Kind durch seine spezielle Formgebung oder strukturierte Ausbildung das Ergreifen des Schlosselements in seinem Endbereich erleichtern. Insbesondere weist dabei der hervorstehende Bereich einen Abschnitt auf, dessen Umfang größer ist als derjenige eines in Richtung des größeren Spielzeugelements folgenden Abschnitts, wodurch das Herausziehen des kleineren Spielzeugelements aus dem größeren Spielzeugelement erleichtert wird.
Vorzugsweise weist dabei der dem lang gestreckten Schlosselement zugewandte Bereich des kleineren Spielzeugelements einen das Ergreifen bzw. Herausziehen des kleineren Spielzeugelements erleichternden, umlaufenden, insbesondere hutförmigen Kragen auf. Weiterhin vorteilhaft ist, wenn der Kragen durch einen Endbereich einer das lang gestreckte Schlosselement umgebenden Kunststoffummantelung gebildet ist. Der hutförmige Kragen bildet so eine zusätzliche, das Ergreifen unterstützende Struktur.

In einer besonders bevorzugten Ausführungsform ist das größere Spielzeugelement mit einem Schließmechanismus ausgestattet, welcher mittels eines Schlüssels, eines einstellbaren Codes oder elektronisch entriegelbar ist.
Bei Betätigung mittels eines Schlüssels kann das größere Spielzeugelement einen Schließzylinder aufweisen, an dessen Schlüsselkanal sich im Bereich der Oberfläche des größeren Spielzeugelements eine trichterartig ausgebildete Schlüsseleinführhilfe anschließt. Diese Schlüsseleinführhilfe erleichtert insbesondere einem Kind durch ihre Trichterform das Einfädeln des Schlüssels in den Schließzylinder.

Vorteilhafterweise weist die genannte Schlüsseleinführhilfe und insbesondere auch der direkt an sie angrenzende Oberflächenbereich des größeren Spielzeugelements eine andere Farbe auf als der restliche Oberflächenbereich des größeren Spielzeugelements. Die unterschiedliche Farbgebung dieses markierten Bereichs unterstützt kindliche Benutzer, am Sicherungssystem die richtige Stelle zum Einführen des Schlüssels leicht aufzufinden.

Bevorzugt wird das lang gestreckte Schlosselement als Kabel, Kette oder Gelenkstab ausgebildet. Derartige Schlosselemente haben sich in der Praxis als hinreichend Diebstahl hemmend bewährt.

Das lang gestreckte Schlosselement kann sich im verriegelten Zustand in zwei zueinander um 90° versetzten Richtungen vom größeren Spielzeugelement hinweg erstrecken. Diese Bauform ermöglicht die Verwendung üblicher Schließzylinder für derartige Sicherungssysteme und damit eine kostengünstige Fertigung.

Weitere Einzelheiten, Vorteile und Ziele der Erfindung ergeben sich aus den Unteransprüchen und der folgenden Beschreibung eines bevorzugten Ausführungsbeispiels, das anhand der Zeichnungen erläutert wird; in diesen zeigen:
- Fig. 1: eine perspektivische Ansicht eines erfindungsgemäßen Sicherungssystems in einem offenem Zustand; und
- Fig. 2: eine weitere perspektivische Teilansicht des erfindungsgemäßen Sicherungssystems nach Fig. 1 in einem geschlossenem Zustand.

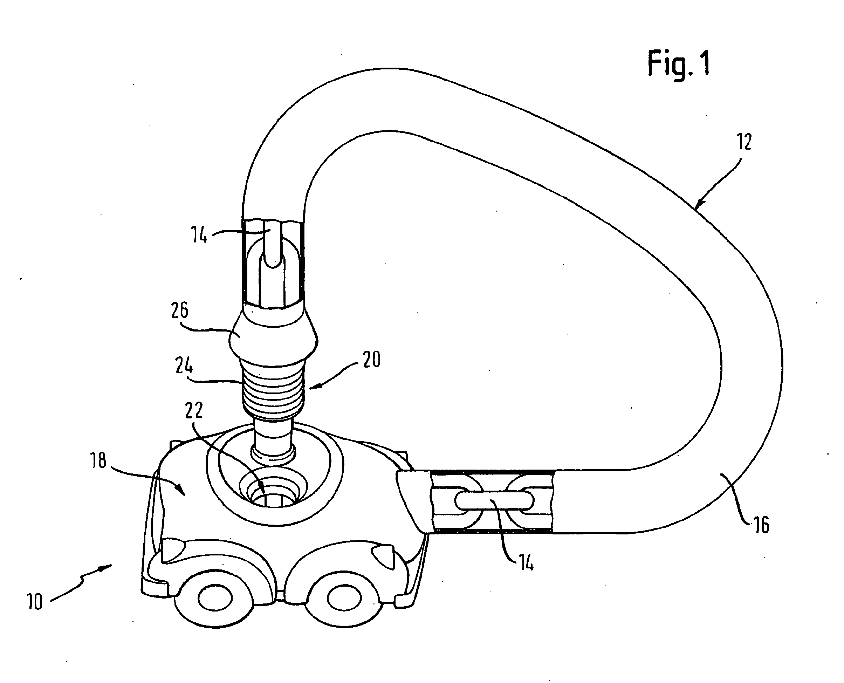

In Fig. 1 ist ein beispielhaftes Sicherungssystem 10 in einem unverriegelten Zustand in einer perspektivischen Ansicht und abschnittsweise in Schnittansicht dargestellt. Das Sicherungssystem 10 weist ein lang gestrecktes Schlosselement 12 auf, als dessen Kern eine von einer Kunststoffummantelung 16 umgebene Kette 14 vorgesehen ist.

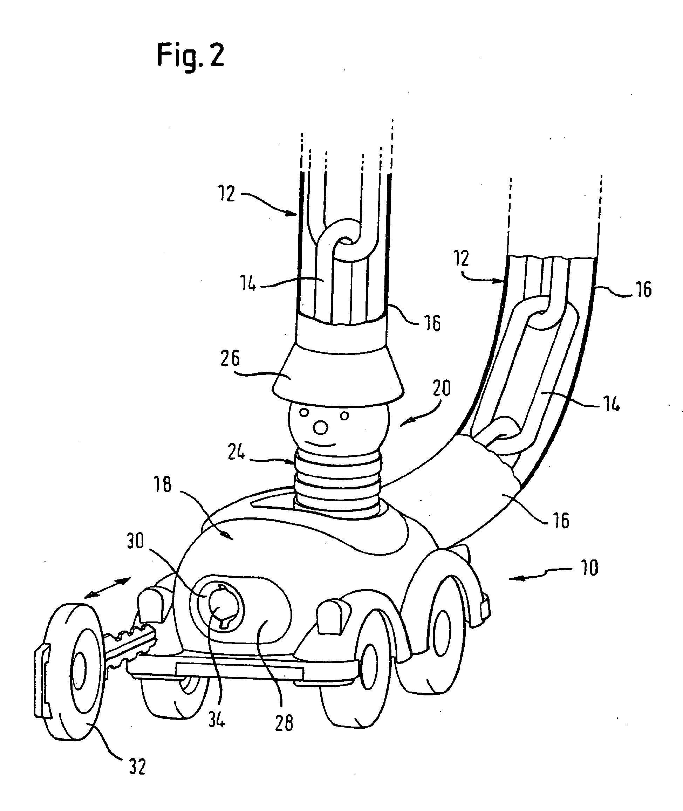

Mit dem einen Ende des Schlosselements 12 ist ein größeres Spielzeugelement 18, das gemäß dieses Ausführungsbeispiels als ein Automobil ausgebildet ist, und mit dem anderen Ende des Schlosselements 12 ein kleineres Spielzeugelement 20, das einen Fahrzeugführer (siehe insbesondere auch Fig. 2) darstellt, unlösbar verbunden. Das größere Spielzeugelement 18 weist eine Aufnahme 22 auf, in die das kleinere Spielzeugelement 20 mit seinem dem Schlosselement 12 abgewandten Ende eingeführt und dort verriegelt werden kann. An das genannte, der Verriegelung dienende Ende schließt sich ein den Rumpfansatz und den Kopf des Fahrzeugführers bildender, aus dem größeren Spielzeugelement 18 herausragender Bereich 24 des kleineren Spielzeugelements 20 an. Dieser herausragende Bereich 24 ist gegenüber dem Schlosselement 12 durch einen umlaufenden, hutförmigen Kragen 26 abgegrenzt und bildet mit diesem eine Handhabe, um das kleinere Spielelement 20 vom größeren Spielelement 18 zu lösen.

Fig. 2 zeigt das erfindungsgemäße Sicherungssystem 10 in einem verriegelten Zustand, wobei das Schlosselement 12 nur abschnittsweise und davon teilweise in einer Schnittansicht dargestellt ist.

Erfindungsgemäß befindet sich das den Fahrzeugführer verkörpernde kleinere Spielzeugelement 20 in der Aufnahme 22 und damit in einer solchen Position innerhalb des ein Automobil verkörpernden größeren Spielzeugelements 18, die der üblichen Sitzposition eines Fahrers entspricht. In dieser Figur ist deutlich zu erkennen, wie der herausragende Bereich 24 des kleineren Spielzeugelements 24 aus dem größeren Spielzeugelement 18 hervorsteht.

Gemäß Figur 2 weist das größere Spielzeugelement 18 an seinem dem Befestigungspunkt für das Schlosselement 12 gegenüberliegenden Ende einen Markierbereich 28 auf, welcher eine trichterförmige Schlüsseleinführhilfe 30 umrahmt, die das Einfädeln eines Schlüssels 32 in den Schlüsselkanal 34 eines im Inneren des größeren Spielzeugelements 18 vorgesehenen Schließzylinders erleichtert. In einer vorteilhaften Ausführungsform des Sicherungssystems 12 weist die Schlüsseleinführhilfe 30 und insbesondere auch der direkt angrenzende Markierbereich 28 eine andere Farbe auf als der restliche Oberflächenbereich des größeren Spielzeugelements 18.

Im verriegelten Zustand bildet das Schlosselement 12 im Bereich seiner beiden Enden einen rechten Winkel aus. Dies ermöglicht in wirtschaftlich vorteilhafter Weise die Verwendung eines für derartige Sicherungssysteme gebräuchlichen Schließmechanismus.

Als bevorzugtes Ausführungsbeispiel wurde das größere Spielelement als ein Automobil dargestellt. Es sind jedoch auch andere Ausführungsformen, beispielsweise in Form eines Schiffes oder eines Flugzeugs möglich. Dabei kann das kleinere Spielzeugelement beim Vertrieb einer erfindungsgemäßen Serie, welche Automobile, Schiffe und Flugzeuge umfasst, zum Zweck einer kostengünstigen Fertigung jeweils gleich ausgeführt werden.

### Bezugszeichenliste

- 10: Sicherungssystem
- 12: Schlosselement
- 14: Kette
- 16: Ummantelung
- 18: größeres Spielzeugelement
- 20: kleineres Spielzeugelement
- 22: Aufnahme
- 24: herausragender Bereich
- 26: umlaufender, hutförmiger Kragen
- 28: Markierbereich
- 30: Schlüsseleinführhilfe
- 32: Schlüssel
- 34: Schlüsselkanal

## Patentansprüche

1. Sicherungssystem (10), **dadurch gekennzeichnet, dass** es eine zweiteilig ausgebildete Spielzeugeinheit mit zwei formschlüssig ineinander passenden Spielzeugelementen (18, 20) umfasst,
- dass jedes der beiden unterschiedlich großen Spielzeugelemente (18, 20) unlösbar mit jeweils einem der beiden Enden eines langgestreckten Schlosselements (12) verbunden ist,
- dass das größere Spielzeugelement (18) genau eine Aufnahme (22) für den dem langgestreckten Schlosselement (12) abgewandten Bereich des kleineren Spielzeugelements (20) aufweist,
- dass das kleinere Spielzeugelement (20) in einer solchen Position im größeren Spielzeugelement (18) verriegelbar ist, in der es nur bereichsweise in die Aufnahme (22) des größeren Spielzeugelements (18) eingeführt ist, und
- dass der in der verriegelten Position aus dem größeren Spielzeugelement (18) hervorstehende Bereich (24) des kleineren Spielzeugelements (20) eine Handhabe für ein Ergreifen desselben bildet.

2. Sicherungssystem (10) nach Anspruch 1,
**dadurch gekennzeichnet,**
**dass** das größere der beiden Spielzeugelemente (18) die Form eines Land-, Luft- oder Wasserfahrzeugs und das kleinere der beiden Spielzeugelemente (20) die Form eines Fahrzeugführers aufweist.

3. Sicherungssystem (10) nach Anspruch 2,
**dadurch gekennzeichnet,**
**dass** zumindest der den Kopf des Fahrzeugführers bildende Bereich (24) des kleineren Spielzeugelements (20) in der verriegelten Position aus dem größeren Spielzeugelement (18) herausragt und somit die Handhabe für das Ergreifen des kleineren Spielzeugelements (20) zum Zweck des Lösens der beiden Spielzeugelemente (18, 20) voneinander bildet.

4. Sicherungssystem (10) nach einem der vorhergehenden Ansprüche,
**dadurch gekennzeichnet,**
**dass** der dem langgestreckten Schlosselement (12) zugewandte Bereich des kleineren Spielzeugelements (20) einen das Ergreifen des kleineren Spielzeugelements erleichternden, umlaufenden, insbesondere hutförmigen Kragen (26) aufweist.

5. Sicherungssystem (10) nach Anspruch 4,
**dadurch gekennzeichnet,**
**dass** der Kragen (26) durch einen Endbereich einer das langgestreckte Schlosselement (12) umgebenden Kunststoffummantelung (16) gebildet ist.

6. Sicherungssystem (10) nach einem der vorhergehenden Ansprüche,
**dadurch gekennzeichnet,**
**dass** das größere Spielzeugelement (18) mit einem Schließmechanismus ausgestattet ist, welcher mittels eines Schlüssels (32), eines einstellbaren Codes oder elektronisch entriegelbar ist.

7. Sicherungssystem nach einem der vorhergehenden Ansprüche,
**dadurch gekennzeichnet,**
**dass** das größere Spielzeugelement (18) einen Schließzylinder aufweist, an dessen Schlüsselkanal (34) sich im Bereich der Oberfläche des größeren Spielzeugelements (18) eine trichterartig ausgebildete Schlüsseleinführhilfe (30) anschließt.

8. Sicherungssystem nach Anspruch 7,
**dadurch gekennzeichnet,**
**dass** die Schlüsseleinführhilfe (30) und insbesondere auch der direkt an sie angrenzende Oberflächenbereich (28) des größeren Spielzeugelements (18) eine andere Farbe aufweist, als der restliche Oberflächenbereich des größeren Spielzeugelements (18).

9. Sicherungssystem nach einem der vorhergehenden Ansprüche,
**dadurch gekennzeichnet,**
**dass** das langgestreckte Schlosselement (12) als Kabel, Kette (14) oder Gelenkstab ausgebildet ist.

10. Sicherungssystem nach einem der vorhergehenden Ansprüche,
**dadurch gekennzeichnet,**
**dass** sich das langgestreckte Schlosselement (12) im verriegelten Zustand in zwei zueinander um 90° versetzten Richtungen vom größeren Spielzeugelement (18) weg erstreckt.

## Claims

1. A securing system (10), **characterised in that** it includes a toy unit made in two parts and having two toy elements (18, 20) fitting into one another in a form fitted manner;
- **in that** each of the two differently sized toy elements (18, 20) is unreleasably connected to a respective one of the two ends of an elongated lock element (12);
- **in that** the larger toy element (18) has precisely one receiver (22) for the region of the smaller toy element (20) remote from the elongated lock element (12);
- **in that** the smaller toy element (20) can be latched in a position in the larger toy element (18) in which it is only introduced regionally into the receiver (22) of the larger toy element (18); and
- **in that** the region (24) of the smaller toy element (20) projecting out of the larger toy element (18) in the latched position forms a grip for gripping thereof.

2. A securing system (10) in accordance with claim 1, **characterised in that** the larger of the two toy elements (18) has the form of a land vehicle, an aircraft or a water vehicle; and **in that** the smaller of the two toy elements (20) has the form of a vehicle driver.

3. A securing system (10) in accordance with claim 2, **characterised in that** at least the region (24) of the smaller toy element (20) forming the head of the vehicle driver projects out of the larger toy element (18) in the latched position and thus forms the grip for the gripping of the smaller toy element (20) for the purpose of releasing the two toy elements (18, 20) from one another.

4. A securing system (10) in accordance with any one of the preceding claims, **characterised in that** the region of the smaller toy element (20) facing the elongated lock element (12) has a peripheral collar (26), in particular of hat shape, which facilitates the gripping of the smaller toy element.

5. A securing system (10) in accordance with claim 4, **characterised in that** the collar (26) is formed by an end region of a plastic jacket surrounding the elongated lock element (12).

6. A securing system (10) in accordance with any one of the preceding claims, **characterised in that** the larger toy element (18) is equipped with a closing mechanism which can be unlatched by means of a key (32), by means of a settable code or electronically.

7. A securing system in accordance with any one of the preceding claims, **characterised in that** the larger toy element (18) has a lock cylinder whose keyway (34) is adjoined by a key introducing aid (30) of funnel form in the region of the surface of the larger toy element (18).

8. A securing system in accordance with claim 7, **characterised in that** the key introducing aid (30) and in particular also the surface region (28) of the larger toy element (18) directly adjoining it have a different colour to the remaining surface region of the larger toy element (18).

9. A securing system in accordance with any one of the preceding claims, **characterised in that** the elongated lock element (12) is made as a cable, a chain (14) or as a jointed bar.

10. A securing system in accordance with any one of the preceding claims, **characterised in that** the elongated lock element (12) extends away from the larger toy (18) in the latched state in two directions offset from one another by 90°.

## Revendications

1. Système de verrouillage (10), **caractérisé en ce qu'**il comprend une unité formant jouet réalisée en deux parties avec deux éléments de jouets (18, 20) ajustés l'un dans l'autre à coopération de formes,
- **en ce que** chacun des deux éléments de jouets (18, 20) de tailles différentes est relié de manière non détachable à une extrémité respective des deux extrémités d'un élément de cadenas (12) étiré en longueur,
- **en ce que** l'élément de jouet (18) de plus grande taille comporte exactement un logement (22) pour la région de l'élément de jouet (20) de plus petite taille détournée de l'élément de cadenas (12) étiré en longueur,
- **en ce que** l'élément de jouet (20) de plus petite taille est verrouillable dans l'élément de jouet (18) de plus grande taille dans une position telle qu'il n'est introduit que localement dans le logement (22) de l'élément de jouet (18) de plus grande taille, et
- **en ce que** la région (24) de l'élément de jouet (20) de plus petite taille qui dépasse hors de l'élément de jouet (18) de plus grande taille dans la position verrouillée forme une manette pour saisir celle-ci.

2. Système de verrouillage (10) selon la revendication 1,
**caractérisé en ce que** le plus grand des deux éléments de jouets (18) présente la forme d'un véhicule terrestre, aérien ou nautique, et **en ce que** le plus petit des deux éléments de jouets (20) présente la forme d'un conducteur du véhicule.

3. Système de verrouillage (10) selon la revendication 2,
**caractérisé en ce qu'**au moins la région (24) de l'élément de jouet (20) de plus petite taille qui forme la tête du conducteur du véhicule dépasse dans la position verrouillée hors de l'élément de jouet (18) de plus grande taille et forme ainsi la manette pour saisir l'élément de jouet (20) de plus petite taille dans le but de détacher les deux éléments de jouets (18, 20) l'un de l'autre.

4. Système de verrouillage (10) selon l'une des revendications précédentes,
**caractérisé en ce que** la région de l'élément de jouet (20) de plus petite taille tournée vers l'élément de cadenas (12) étiré en longueur comporte une collerette (26) périphérique qui facilite la saisie de l'élément de jouet de plus petite taille, en particulier une collerette en forme de chapeau.

5. Système de verrouillage (10) selon la revendication 4,
**caractérisé en ce que** la collerette (26) est formée par une région terminale d'une enveloppe en matière plastique (16) qui entoure l'élément de cadenas (12) étiré en longueur.

6. Système de verrouillage (10) selon l'une des revendications précédentes,
**caractérisé en ce que** l'élément de jouet (18) de plus grande taille est équipé d'un mécanisme de fermeture qui peut être déverrouillé au moyen d'une clé (32), d'un code à choisir, ou par voie électronique.

7. Système de verrouillage selon l'une des revendications précédentes,
**caractérisé en ce que** l'élément de jouet (18) de plus grande taille comprend un cylindre de fermeture avec un canal à clé (34) auquel se raccorde un moyen d'aide pour l'introduction d'une clé (30) réalisé en forme d'entonnoir, dans la région de la surface de l'élément de jouet (18) de plus grande taille.

8. Système de verrouillage selon la revendication 7,
**caractérisé en ce que** le moyen d'aide pour l'introduction d'une clé (30) et en particulier également la région de surface (28) directement adjacent à ce moyen, dans l'élément de jouet (18) de plus grande taille, présente une autre couleur que le reste de la région de surface de l'élément de jouet (18) de plus grande taille.

9. Système de verrouillage selon l'une des revendications précédentes,
**caractérisé en ce que** l'élément de cadenas (12) étiré en longueur est réalisé sous la forme d'un câble, d'une chaîne (14) ou d'un barreau articulé.

10. Système de verrouillage selon l'une des revendications précédentes,
**caractérisé en ce que** l'élément de cadenas (12) étiré en longueur s'étend, à l'état verrouillé, en éloignement de l'élément de jouet (18) de plus grande taille dans deux directions décalées l'une par rapport à l'autre de 90°.
